# EUROPÄISCHE PATENTSCHRIFT

(11) **EP 3 918 398 B1**
(45) Veröffentlichungstag und Bekanntmachung des Hinweises auf die Patenterteilung: **02.07.2025**
(21) Anmeldenummer: 19835646.1
(22) Anmeldetag: 19.12.2019
(51) Int. Cl.: G02B 21/00, G02B 23/00, G02B 21/36, G02B 21/24, G02B 15/20, G02B 15/14, G02B 21/02, G02B 13/22, G02B 23/04, G02B 27/00

(54) **OPTISCHES SYSTEM FÜR EIN MIKROSKOP**
OPTICAL SYSTEM FOR A MICROSCOPE
SYSTÈME OPTIQUE POUR MICROSCOPE

(30) Priorität: 30.01.2019 DE 102019102330
(43) Veröffentlichungstag der Anmeldung: 08.12.2021
(73) Patentinhaber: Leica Microsystems CMS GmbH, 35578 Wetzlar (DE)
(72) Erfinder: LOTTER, Andreas, 35578 Wetzlar (DE); SCHULZ, Christian, 35606 Solms (DE); SCHUMANN, Christian, 35423 Lich (DE)
(74) Vertreter: Schaumburg und Partner Patentanwälte mbB
(86) Internationale Anmeldenummer: PCT/EP2019/086268
(87) Internationale Veröffentlichungsnummer: WO 2020/156744

(56) Entgegenhaltungen:
- WO-A1-2017/015077
- DE-A1- 102008 026 774
- DE-B3- 102016 119 268
- US-A1- 2006 114 554

## Beschreibung

### Technisches Gebiet

Die vorliegende Erfindung betrifft ein optisches System für ein Mikroskop zum Abbilden eines Objektes. Ferner betrifft die Erfindung ein Mikroskop mit einem solchen optischen System sowie ein Verfahren zur Abbildung eines Objektes unter Verwendung eines Mikroskops.

### Hintergrund der Erfindung

Auf dem Gebiet der Mikroskopie sind optische Systeme bekannt, die eine Volumenbildgebung einer Probe ermöglichen. Im Unterschied zu einer herkömmlichen mikroskopischen Abbildung, bei der die zu untersuchende Probe in der Regel in einer zur optischen Achse senkrechten Ebene abgebildet wird, ermöglicht eine solche Volumenbildgebung die Abbildung eines Probenbereichs, der sich in die Tiefe der Probe erstreckt. Zu diesem Zweck werden bevorzugt Mikroskope eingesetzt, die nur eine dünne Schicht der Probe mit einer flächigen Beleuchtungslichtverteilung, auch als Lichtblatt oder Lichtscheibe bezeichnet, beleuchten, wobei das Lichtblatt in dieser speziellen Anwendung häufig schräg zur optischen Achse gestellt ist.

Auf eine Volumenbildgebung ausgelegte Mikroskope weisen in der Regel ein Teleskopsystem auf, das den Zielbereich der Probe aus dem Objektraum in den Bildraum abbildet. Um eine weitgehend aberrationsfreie Abbildung zu ermöglichen, sollte die Vergrößerung des Teleskopsystems so gewählt sein, dass sie dem Verhältnis der Brechungsindizes entspricht, welche die im Objekt- und Bildraum angeordneten optischen Medien aufweisen. In der Regel unterscheiden sich diese Brechungsindizes voneinander. Insbesondere bei der mikroskopischen Untersuchung biologischer Proben ist die Bedingung für eine aberrationsfreie Volumenbildgebung, nämlich die Anpassung der Vergrößerung des Teleskopsystems an das Verhältnis des objektseitigen Brechungsindex zum bildseitigen Brechungsindex, nur schwer zu erfüllen. So variiert in einer biologischen Probe deren Brechungsindex häufig signifikant mit der Abbildungstiefe innerhalb der Probe, was zu einer entsprechenden Variation des vorgenannten Brechungsindexverhältnisses führt, auf das die Vergrößerung des Teleskopsystems einzustellen ist.

DE 10 2016 119 268 B3 offenbart eine Transportoptik für ein Lichtblattmikroskop. Die Transportoptik umfasst ein Afokalsystem, das ausgebildet ist, das Brechungsindexverhältnis zwischen einem Probenraum und einem Zwischenbildraum aneinander anzupassen. Zum Stand der Technik wird ferner auf die Dokumente WO 2017/0 150 177, US 2016/0114554 A1 und DE 10 2008 026 774 A1 verwiesen.

Probenbedingte Brechungsindexfehlanpassungen sind in üblichen mikroskopischen Anwendungen besonders nachteilig, da die dort eingesetzten optischen Systeme häufig eine hohe numerische Apertur aufweisen. Entsprechend groß sind deshalb die mit einer Brechungsindexfehlanpassung einhergehenden sphärischen Abbildungsfehler.

Aufgabe der Erfindung ist es, ein für ein Mikroskop vorgesehenes optisches System anzugeben, das ungeachtet etwaiger Unterschiede der Brechungsindizes im Objekt- und Bildraum eine weitgehend aberrationsfreie Objektabbildung ermöglicht. Ferner ist es Aufgabe der Erfindung, ein Mikroskop mit einem optischen System sowie ein Verfahren zur Abbildung eines Objektes unter Verwendung eines solchen Mikroskops anzugeben.

Die Erfindung löst diese Aufgabe durch die Gegenstände der unabhängigen Ansprüche. Vorteilhafte Weiterbildungen ergeben sich aus den abhängigen Ansprüchen und der folgenden Beschreibung.

Es wird ein für ein Mikroskop bestimmtes optisches System vorgeschlagen, umfassend ein Teleskopsystem mit einer optischen Korrektionseinheit, die zur Korrektion eines sphärischen Abbildungsfehlers einstellbar ist, und mit einer Zoomoptik, die zur Anpassung der Vergrößerung des Teleskopsystems an das Verhältnis zweier Brechungsindizes, von denen einer der Objektseite und der andere der Bildseite zugeordnet ist, innerhalb eines vorbestimmten Vergrößerungsbereichs einstellbar ist, wobei das Teleskopsystem durch die in ihm enthaltene Zoomoptik über den gesamten Vergrößerungsbereich sowohl bezüglich der Objektseite als auch bezüglich der Bildseite telezentrisch ausgeführt ist.

In dieser Ausführungsform ermöglicht die Zoomoptik eine variable Zoomeinstellung in Abhängigkeit der in der konkreten mikroskopischen Anwendung vorliegenden Brechungsindexfehlanpassung. Insbesondere lässt sich mit Hilfe der Zoomoptik die Vergrößerung auf einen Wert einstellen, der im Wesentlichen gleich dem Verhältnis zwischen dem Brechungsindex im Objektraum und dem Brechungsindex im Bildraum ist.

Als Teil des Teleskopsystems sorgt die Zoomoptik dafür, dass das Teleskopsystem als Ganzes beidseitig, d.h. sowohl bezüglich des Objektraums als auch bezüglich des Bildraums, telezentrisch ausgeführt ist. Hierzu bildet die Zoomoptik insbesondere ein sogenanntes pupillenreguliertes Zoomsystem, mit dem eine Volumenbildgebung möglich ist. Ein Beispiel für ein solches pupillenreguliertes Zoomsystem ist beschrieben in H. Gross, Handbook of Optical Systems, Vol. 4, ISBN 978-3-527-40380-6, Wiley-VCH Weinheim 2008, S. 478-482.

In der vorliegenden Ausführungsform enthält das afokale Teleskopsystem ferner eine optische Korrektionseinheit, das der Korrektion eines insbesondere bei hohen numerischen Aperturen auftretenden sphärischen Abbildungsfehlers dient. Mit der Zoomoptik und der vorgenannten Korrektionseinheit sind somit zwei Freiheitsgrade zur Einstellung des Teleskopsystems realisiert, die sich je nach Anwendung jeweils für sich oder gemeinsam für eine weitgehend aberrationsfreie Probenabbildung nutzen lassen. Vorzugsweise lassen sich sowohl die Zoomoptik als auch die Korrektionseinheit motorisch verstellen.

Das Teleskopsystem enthält ein der Objektseite zugewandtes erstes Objektiv und ein der Bildseite zugewandtes zweites Objektiv. Ferner ist die Zoomoptik vorzugsweise so ausgebildet, dass sie die der Bildseite zugewandte Brennebene des ersten Objektivs über den gesamten Vergrößerungsbereich auf die der Objektseite zugewandte Brennebene des zweiten Objektivs abbildet. Diese
Abbildungseigenschaft charakterisiert die Zoomoptik als pupillenreguliertes Zoomsystem, das eine weitgehend fehlerfreie Volumenbildgebung auch bei variabler Brechungsindexfehlanpassung ermöglicht. Die Eigenschaft der Zoomoptik, als pupillenreguliertes System zu wirken, lässt sich auch so verstehen, dass die Zoomoptik die Pupille des objektseitigen Objektivs über den gesamten Vergrößerungs- bzw. Zoombereich auf die Pupille des bildseitigen Objektivs abbildet, wobei die vorgenannten Objektive als telezentrische Systeme ausgeführt sind.

Die Korrektionseinheit ist in dem ersten Objektiv oder in dem zweiten Objektiv enthalten. In dieser Ausführungsform ist die Korrektionseinheit beispielsweise aus einer Objektivlinsengruppe gebildet, die sich zur Korrektion des sphärischen Abbildungsfehlers längs der optischen Achse des Objektivs verstellen lässt. Da für den Fall, dass die Vergrößerung des Teleskopsystems dem Verhältnis der Brechungsindizes im Objekt- und Bildraum angepasst ist, die beiden Objektive gleiche Öffnungswinkel haben, ist frei wählbar, welches der beiden Objektive mit der Korrektionseinheit auszustatten ist. Dies ermöglicht einen besonders flexiblen optischen Aufbau.

In einer bevorzugten Weiterbildung entspricht der Vergrößerungsbereich des Teleskopsystems einem Bereich, in dem das Verhältnis der beiden Brechungsindizes zwischen 1,0 und 1,6 liegt. Ist die Zoomoptik zur Realisierung eines solchen Vergrößerungsbereichs ausgebildet, so lassen sich probeninduzierte Brechungsindexfehlanpassungen in weiten Grenzen kompensieren.

In einer bevorzugten Ausgestaltung enthält das Teleskopsystem ein zwischen dem ersten Objektiv und dem zweiten Objektiv angeordnetes Kepler-Fernrohrsystem, in dem die Zoomoptik enthalten ist. Mit einem solchen Kepler-Fernrohrsystem lässt sich das afokale Teleskopsystem in vergleichsweise einfacher Weise realisieren.

Vorzugsweise enthält das Kepler-Fernrohrsystem zwei Tubuslinseneinheiten, von denen eine die Zoomoptik bildet. So ist die Zoomoptik z.B. durch diejenige der beiden Tubuslinseneinheiten gegeben, die sich objektseitig einer innerhalb des Kepler-Fernrohrsystems liegenden Zwischenbildebene befindet.

In einer weiteren bevorzugten Ausführung enthält die Zoomoptik mindestens drei Linseneinheiten, die zum Ändern der Vergrößerung des Teleskopsystems längs dessen optischer Achse vorzugsweise unabhängig voneinander bewegbar sind. Jede der vorgenannten Linseneinheiten stellt einen Freiheitsgrad zur gewünschten Pupillenregulierung dar.

In einer besonders bevorzugten Ausführungsform umfasst das optische System eine Fokussiervorrichtung, die ausgebildet ist, das erste Objektiv längs dessen optischer Achse relativ zu dem Objekt zu bewegen, wodurch sich der Abstand des ersten Objektivs von dem Kepler-Fernrohrsystem ändert. Ferner sind die drei Linseneinheiten der Zoomoptik längs der optischen Achse unabhängig voneinander derart bewegbar, dass bei sich änderndem Abstand des ersten Objektivs von dem Kepler-Fernrohrsystem die der Bildseite zugewandte Brennebene des ersten Objektivs unter Beibehaltung der durch die Zoomoptik eingestellten Vergrößerung und der Afokalität des Teleskopsystems auf die der Objektseite zugewandte Brennebene des zweiten Objektivs abgebildet wird. In dieser Ausführungsform ist eine sogenannte Objektivfokussierung realisiert, also eine Fokussierung, bei der das dem Objekt zugewandte Objektiv (nicht aber etwa ein das Objekt tragender Mikroskoptisch) längs der optischen Achse bewegt wird, um die gewünschte Scharfeinstellung vorzunehmen. Bei einer solchen Objektivfokussierung bieten die drei Linseneinheiten der Zoomoptik drei steuerbare Freiheitsgrade, die durch die Positionen der drei Linseneinheiten längs der optischen Achse gegeben sind, die Möglichkeit, die Pupillenregulierung dazu zu nutzen, die Pupillenabbildung in Grenzen frei einzustellen. Dadurch können bei der Objektivfokussierung, die den axialen Abstand des objektseitigen Objektivs von dem Kepler-Fernrohrsystem und damit auch die Abbildung der bildseitigen Brennebene dieses Objektivs durch das Kepler-Fernrohrsystem verändert, die Lage des Bildes der vorgenannten bildseitigen Brennebene und die Lage eines in dem Kepler-Fernrohrsystem liegenden Zwischenbildes eingestellt werden. Dadurch ist es insbesondere möglich, durch eine geeignete Ansteuerung der einzelnen Linseneinheiten der Zoomoptik die beidseitige Telezentrie auch bei Nutzung einer Objektivfokussierung, z.B. einer Revolverfokussierung, aufrechtzuerhalten. Um in diesem Fall die drei Einstellgrößen, nämlich Telezentrie, Afokalität und Vergrößerungsmaßstab, unabhängig voneinander einstellen zu können, ist vorteilhaft vorgesehen, die drei Freiheitsgrade, welche durch die axialen Positionen der drei Linsengruppen der Zoomoptik gegeben sind, unabhängig voneinander anzusteuern.

In einer bevorzugten Ausführungsform umfasst das optische System eine Vorrichtung, die ausgebildet ist, den dem Objektraum zugeordneten Brechungsindex zu erfassen, und eine Steuerung, die ausgebildet ist, die optische Korrektionseinheit und die Zoomoptik in Abhängigkeit des erfassten Brechungsindex einzustellen. Die vorgenannte Erfassungsvorrichtung kann beispielsweise darauf ausgelegt sein, den Brechungsindex in situ zu messen und der Steuerung als Steuerparameter zuzuführen. In einer vereinfachten Ausgestaltung kann diese Vorrichtung aber auch lediglich dazu dienen, dem Benutzer eine Eingabe zu ermöglichen, über die der Steuerung der Brechungsindex als Steuerparameter zur Verfügung gestellt wird.

In einer besonders bevorzugten Ausführungsform ist die Steuerung ausgebildet, die optische Korrektionseinheit und die Zoomoptik miteinander gekoppelt in Abhängigkeit des erfassten Brechungsindex einzustellen. Eine solche gekoppelte Einstellung bedeutet, dass die beiden ursprünglich zur Verfügung stehenden Einstellfreiheitsgrade, nämlich die Korrektionseinstellung und die Zoomeinstellung, auf einen einzigen Freiheitsgrad reduziert werden. Dies kann beispielsweise in der Weise erfolgen, dass eine Arbeitsebene, auf die das Teleskopsystem fokussiert ist, vorgegeben wird. Durch diese Vorgabe einer festen Arbeitsebene innerhalb des Objektes wird eine feste Kopplung zwischen Zoom- und Korrektionseinstellung im Teleskopsystem implementiert, so dass der Wert für den verbleibenden einzigen Freiheitsgrad nur noch mit dem objektseitigen Brechungsindex, nicht aber mit der Abbildungstiefe innerhalb der Probe korreliert. Bei Kenntnis des Brechungsindex kann so ein optimaler Wert des vorgenannten Freiheitsgrades bestimmt werden.

In einer weiter verfeinerten Ausführungsform ist ferner eine Vorrichtung vorgesehen, die ausgebildet ist, den Abstand des Teleskopsystems von einer Referenzebene zu erfassen, welche die Lage des Objektes relativ zu dem Teleskopsystem definiert. Die Steuerung ist dann vorzugsweise ausgebildet, zumindest die optische Korrektionseinheit zusätzlich in Abhängigkeit des erfassten Abstandes einzustellen. Als Referenzebene kann beispielsweise die Oberfläche eines Deckglases genutzt werden, anhand der sich der Abstand zwischen dem Objekt und dem Teleskopsystem längs dessen optischer Achse bestimmen lässt. In dieser alternativen Ausführungsform sind also die beiden Freiheitsgrade, die durch die Korrektionseinstellung und die Zoomeinstellung gegeben sind, im Unterschied zu der vorstehend beschriebenen Ausführungsform nicht mehr fest miteinander gekoppelt. Mit Kenntnis des Abstandes zwischen dem Teleskopsystem und der Referenzebene lassen sich bei gleichzeitiger Kenntnis des objektseitigen Brechungsindex sowohl die sphärische Korrektion für die aktuell eingestellte Objektebene als auch das Vergrößerungsverhältnis auf das Verhältnis zwischen dem objektseitigen Brechungsindex und dem bildseitigen Brechungsindex einstellen. Auf diese Weise kann für jede Lage längs der optischen Achse innerhalb des Objektes automatisiert eine optimale Korrektion der Volumenabbildung erzielt werden

In einer weiteren Ausführungsform enthält das Teleskopsystem eine Lichtablenkvorrichtung, die innerhalb des Teleskopsystems am Ort einer Zwischenpupille angeordnet ist. Die Zwischenbildebene lässt sich beispielsweise mit Hilfe eines weiteren Fernrohrsystems generieren. Die Lichtablenkvorrichtung kann insbesondere in einer lichtblattmikroskopischen Anwendung gewinnbringend verwendet werden, z.B. zur Erzeugung des Lichtblattes als solches und/oder zu dessen Verstellung, um die Probe mit dem Lichtblatt abzutasten.

Nach einem weiteren Aspekt ist ein Mikroskop mit einem optischen System vorstehend beschriebener Art vorgesehen.

Ein solches Mikroskop kann beispielsweise als Lichtblattmikroskop ausgeführt sein. Insbesondere ist das Mikroskop z.B. in Form eines zur Volumenbildgebung geeigneten OPM- oder SCAPE-Mikroskops ausgebildet. Hierbei steht OPM für "oblique plane microscope" und SCAPE für "swept confocally aligned planar excitation". Diese beiden Mikroskopkonfigurationen zeichnen sich dadurch aus, dass die Probe durch jeweils durch ein- und dasselbe Objektiv beleuchtet und abgebildet wird. Dies hat in diesen Konfigurationen zur Folge, dass das generierte Lichtblatt schräg zur optischen Achse liegt. Dementsprechend ist in einer OPM- oder einer SCAPE-Konfiguration auch dafür gesorgt, dass die Detektionsebene, d.h. diejenige Ebene innerhalb der Probe, die auf den Detektor abgebildet wird, schräg zur optischen Achse ausgerichtet ist.

Nach einem weiteren Aspekt der Erfindung ist ferner ein Verfahren zur Abbildung eines Objektes unter Verwendung eines Mikroskops mit einem Teleskopsystem vorgesehen, das eine optische Korrektionseinheit und eine Zoomoptik enthält. Das Verfahren sieht folgende Schritte vor: Korrigieren eines sphärischen Abbildungsfehlers durch Einstellen der optischen Korrektionseinheit und Anpassen der Vergrößerung des Teleskopsystems innerhalb eines vorbestimmten Vergrößerungsbereichs an das Verhältnis zweier Brechungsindizes, von denen einer der Objektseite und der andere der Bildseite zugeordnet ist, durch Einstellen der Zoomoptik. Das Verfahren sieht ferner vor, dass der Brechungsindex, welcher der Objektseite zugeordnet ist, erfasst wird und die optische Korrektionseinheit und die Zoomoptik in Abhängigkeit dieses Brechungsindex eingestellt werden.

In einer bevorzugten Ausführungsform wird eine Arbeitsebene vorgegeben, auf die das Teleskopsystem fokussiert ist. Die optische Korrektionseinheit und die Zoomoptik werden miteinander gekoppelt in Abhängigkeit des erfassten Brechungsindex eingestellt. In dieser Ausführungsform werden also die beiden Einstellfreiheitsgrade, nämlich die Einstellung der Korrektionseinheit sowie die Einstellung der Zoomoptik, miteinander zu einem einzigen Freiheitsgrad gekoppelt, wobei dieser verbleibende Freiheitsgrad nur noch mit dem objektseitigen Brechungsindex korreliert.

In einer weiteren Ausführungsform wird der Abstand des Teleskopsystems von einer Referenzebene erfasst, welche die Lage des Objektes relativ zu dem Teleskopsystem definiert. Zumindest die optische Korrektionseinheit wird zusätzlich in Abhängigkeit des erfassten Abstandes eigestellt. In diesem Fall sind die beiden Freiheitsgrade der Korrektions- und Zoomeinstellung nicht fest miteinander gekoppelt.

Ausführungsbeispiele der folgenden Erfindung werden im Folgenden anhand der Figuren näher erläutert. Darin zeigen:
- Fig. 1: eine schematische Darstellung eines Mikroskops, das ein optisches System gemäß einem Ausführungsbeispiel aufweist;
- Fig. 2: eine schematische Darstellung einer abgewandelten Ausführungsform des Mikroskops nach Figur 1;
- Fig. 3: eine schematische Darstellung einer Vorrichtung, die geeignet ist, in dem optischen System nach Fig. 2 einen Brechungsindex im Objektraum zu bestimmen;
- Fig. 4: einen Objektraum des Mikroskops nach Figur 2 zur Veranschaulichung, wie mittels der Vorrichtung nach Fig. 3 der Brechungsindex bestimmt wird;
- Fig. 5: eine durch einen positionssensitiven Detektor der Vorrichtung nach Figur 3 erfasste Intensitätsverteilung zur Bestimmung des Brechungsindex;
- Fig. 6: den Objektraum des Mikroskops nach Figur 2 zur Veranschaulichung, wie mittels der Vorrichtung nach Fig. 3 der Abstand des optischen Systems zu einem Deckglas bestimmt wird;
- Fig. 7: eine durch den positionssensitiven Detektor der Vorrichtung nach Figur 3 erfasste Intensitätsverteilung zur Abstandsbestimmung;
- Fig. 8: ein Linsendiagramm des objektseitigen Objektivs des optischen Systems als Ausführungsbeispiel;
- Fig. 9: eine schematische Darstellung des Mikroskops, das ein optisches System gemäß einem weiteren Ausführungsbeispiel enthält;
- Fig. 10: eine schematische Darstellung einer abgewandelten Ausführungsform des Mikroskops nach Figur 9;
- Fig. 11: ein Flussdiagramm, das ein Einstellverfahren als Ausführungsbeispiel zeigt, bei dem eine optische Korrektionseinheit und eine Zoomoptik gekoppelt angesteuert werden;
- Fig. 12: ein Flussdiagramm, das ein Einstellverfahren als weiteres Ausführungsbeispiel zeigt, bei dem die optische Korrektionseinheit und die Zoomoptik unabhängig voneinander angesteuert werden; und
- Fig. 13: eine schematische Darstellung zur Veranschaulichung, wie eine Arbeitsebene in einer OPM- oder SCAPE-Konfiguration festgelegt wird.

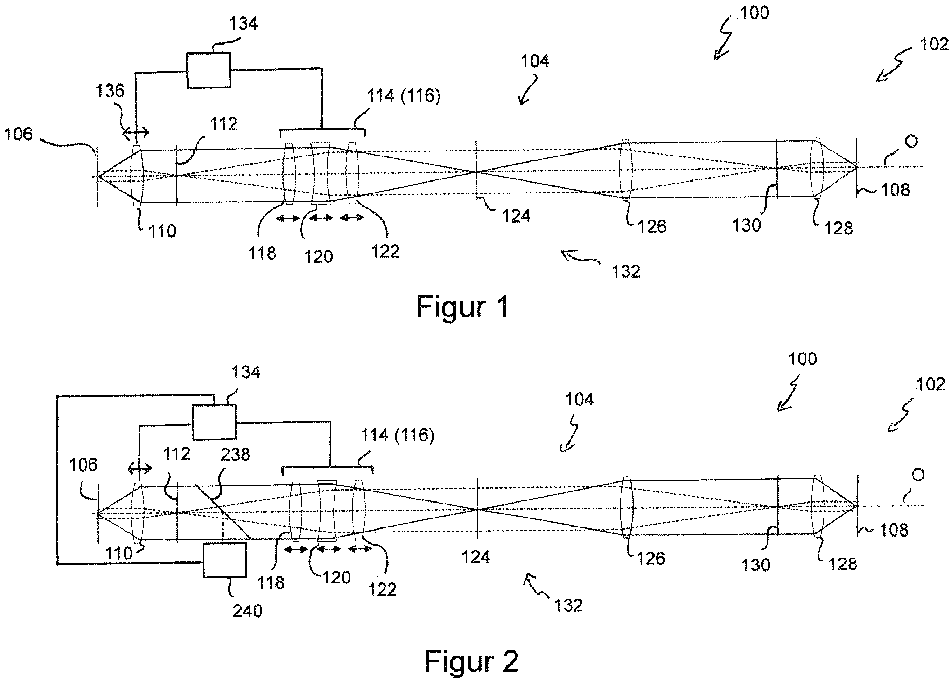

Die schematische Darstellung nach Figur 1 zeigt ein optisches System 100, das Teil eines in Figur 1 allgemein mit 102 bezeichneten Mikroskops ist. In Figur 1 sind (wie auch in den weiteren Figuren) nur diejenigen Komponenten des Mikroskops 102 dargestellt, die für das Verständnis des Ausführungsbeispiels erforderlich sind.

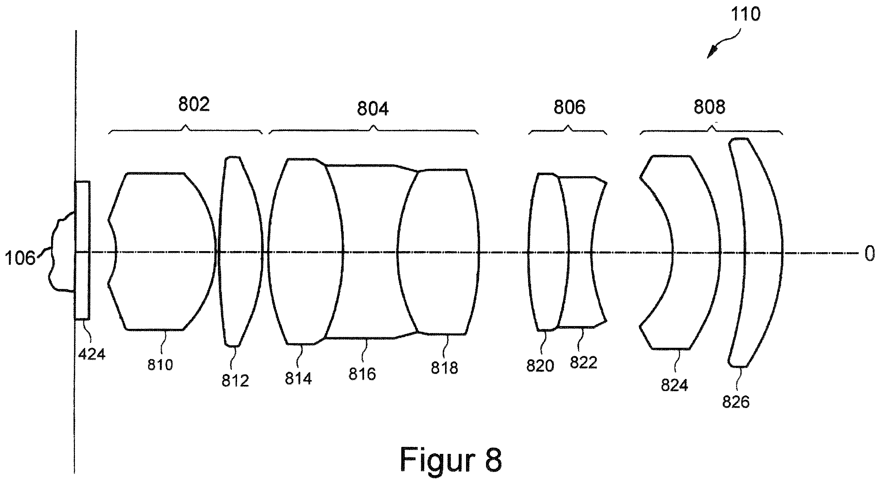

Das optische System 100 nach Figur 1 umfasst ein Teleskopsystem 104, das dazu dient, ein in einem Objektraum liegendes Objekt 106 in einen Bildraum abzubilden, d.h. ein Bild 108 des Objektes 106 zu generieren. Hierzu enthält das Teleskopsystem 104 ausgehend von der Objektseite zur Bildseite hin ein erstes Objektiv 110 mit einer hinteren, d.h. bildseitigen Brennebene 112, eine Zoomoptik 114, die in dem vorliegenden Ausführungsbeispiel eine erste Tubuslinseneinheit 116 bildet und aus drei längs der optischen Achse O des Teleskopsystems 104 bewegbaren Linseneinheiten 118, 120, 122 gebildet ist, eine Zwischenbildebene 124, eine zweite Tubuslinseneinheit 126 und zweites Objektiv 128 mit einer hinteren, d.h. in der vorliegenden Konfiguration objektseitigen Brennebene 130. Die beiden Tubuslinseneinheiten 114, 126 bilden ein Kepler-Fernrohrsystem 132. Das Teleskopsystem 104 weist ferner eine optische Korrektionseinheit auf, die in dem vorliegenden Ausführungsbeispiel in dem objektseitigen Objektiv 110 integriert ist und der Korrektion eines sphärischen Abbildungsfehlers dient. Ein Ausführungsbeispiel der Korrektionseinheit wird später unter Bezugnahme auf Figur 8 näher erläutert.

Die Zoomoptik 114 hat die Funktion, die Vergrößerung des Teleskopsystems 104 innerhalb eines vorbestimmten Vergrößerungsbereichs an das Verhältnis zweier Brechungsindizes anzupassen, von denen ein Brechungsindex einem optischen Medium im Objektraum und der andere Brechungsindex einem optischen Medium im Bildraum zugeordnet ist. Dabei kann sich der objektseitige Brechungsindex beispielsweise auf ein Einbettmedium, in welches das Objekt 106 eingebettet ist, oder auf das Objekt 106 selbst beziehen. Insbesondere wenn das Mikroskop 102 zur Volumenbildgebung verwendet wird, kann es für eine weitgehend aberrationsfreie Abbildung erforderlich sein, den Brechungsindex innerhalb des Objektes in Abhängigkeit der Abbildungstiefe zu kennen.

Um eine gewünschte Vergrößerung einzustellen, werden in dem vorliegenden Ausführungsbeispiel eine oder mehrere der Linseneinheiten 118, 120, 122 der Zoomoptik 114 längs der optischen Achse O bewegt. Somit entspricht eine konkrete axiale Positionierung der Linseneinheiten 118, 120, 122 einer speziellen Zoomeinstellung, welche wiederum die gewünschte Vergrößerung des Teleskopsystems 104 bewirkt.

Das optische System 100 nach Figur 1 weist eine Steuerung 134 auf, über welche die in dem objektseitigen Objektiv 110 integrierte Korrektionseinheit und die Zoomoptik 114 ansteuerbar sind, um die gewünschte Korrektionseinstellung bzw. die gewünschte Zoomeinstellung vorzunehmen.

Die Zoomoptik 114 ist in dem vorliegenden Ausführungsbeispiel als pupillenreguliertes Zoomsystem ausgebildet. Demnach bildet die Zoomoptik 114 die bildseitige Brennebene 112 des objektseitigen Objektivs 110 über den gesamten Vergrößerungsbereich, d.h. für sämtliche Zoomeinstellungen, auf die objektseitige Brennebene 130 des bildseitigen Objektivs 128 ab. Wie der in Figur 1 gestrichelt dargestellte Pupillenstrahlengang zeigt, bedeutet dies, dass die Zoomoptik 114 die Pupille des objektseitigen Objektivs 110 über den gesamten Vergrößerungs- bzw. Zoombereich auf die Pupille des bildseitigen Objektivs 128 abbildet. Dabei sind die beiden Objektive 110, 128 selbst als telezentrische Systeme ausgeführt. Im Ergebnis bildet somit das Teleskopsystem 104 als Ganzes ein beidseitiges, d.h. sowohl bezüglich der Objektseite als auch bezüglich der Bildseite telezentrisches System.

In dem vorliegenden Ausführungsbeispiel kann das optische System 100 ferner eine Fokussiervorrichtung aufweisen, die in der Darstellung nach Figur 1 rein schematisch durch einen Doppelpfeil 136 angedeutet ist. Die Fokussiervorrichtung 136 ist über die Steuerung 134 derart ansteuerbar, dass sie das objektseitige Objektiv 110 als Ganzes längs der optischen Achse O auf das Objekt 106 zu oder von diesem weg bewegt, um auf eine gewünschte Ebene innerhalb des Objektes 106 scharf zu stellen. Durch diese axiale Bewegung des Objektivs 110 ändert sich der Abstand, den dessen bildseitige Brennebene 112 bezüglich des aus den beiden Tubuslinseneinheiten 114, 126 gebildeten Kepler-Fernrohrsystems 132 aufweist. Somit ist bei dem in Figur 1 gezeigten Ausführungsbeispiel eine sogenannte Objektivfokussierung realisiert.

Um bei einer solchen Objektivfokussierung die vorgenannte Abstandsänderung kompensieren zu können, sind die drei Linseneinheiten 118, 120, 122 der Zoomoptik 114 unabhängig voneinander ansteuerbar. Auf diese Weise lässt sich die Pupillenabbildung so steuern, dass innerhalb des vorbestimmten Vergrößerungsbereichs jeder beliebige Vergrößerungsmaßstab eingestellt werden kann und zugleich die beidseitige Telezentrizität sowie die Afokalität des Teleskopsystems 104 erhalten bleiben.

Die axialen Verstellwege der die Zoomoptik 114 bildenden Linseneinheiten 118, 120, 122 sind in dem vorliegenden Ausführungsbeispiel so gewählt, dass der Bereich, innerhalb dessen sich die Vergrößerung des Teleskopsystems 104 variieren lässt, einem Bereich entspricht, in dem das Verhältnis zwischen dem objektseitigen Brechungsindex und dem bildseitigen Brechungsindex zwischen 1,0 und 1,6 liegt.

In dem in Figur 1 dargestellten Ausführungsbeispiel sind die Einstellung der in dem Objektiv 110 integrierten Korrektionseinheit und die Einstellung der Zoomoptik 114 miteinander gekoppelt. Durch diese Kopplung sind die beiden eigentlich zur Verfügung stehenden Einstellfreiheitsgrade, nämlich die Korrektionseinstellung und die Zoomeinstellung, auf einen einzigen Freiheitsgrad reduziert, der vorliegend in Abhängigkeit des objektseitigen Brechungsindex gesteuert wird. So ist in dem Ausführungsbeispiel nach Figur 1 die Objektebene, auf die das Teleskopsystem 104 fokussiert ist, vorgegeben. Diese Objektebene definiert eine feste Arbeitsebene innerhalb des Objektes 106, so dass die Abbildungstiefe festgelegt ist. Als Steuerparameter, anhand dessen die Korrektion der sphärischen Aberration und die Zoomeinstellung vorgenommen werden, verbleibt somit allein der dem Objektraum zugeordnete Brechungsindex. Letzterer kann der Steuerung 134 beispielsweise über eine in Figur 1 nicht gezeigte Eingabevorrichtung zugeführt werden.

In einer demgegenüber abgewandelten Ausführungsform kann der Brechungsindex auch durch das Mikroskop 102 selbst in situ gemessen werden. Eine solche Abwandlung ist in Figur 2 gezeigt.

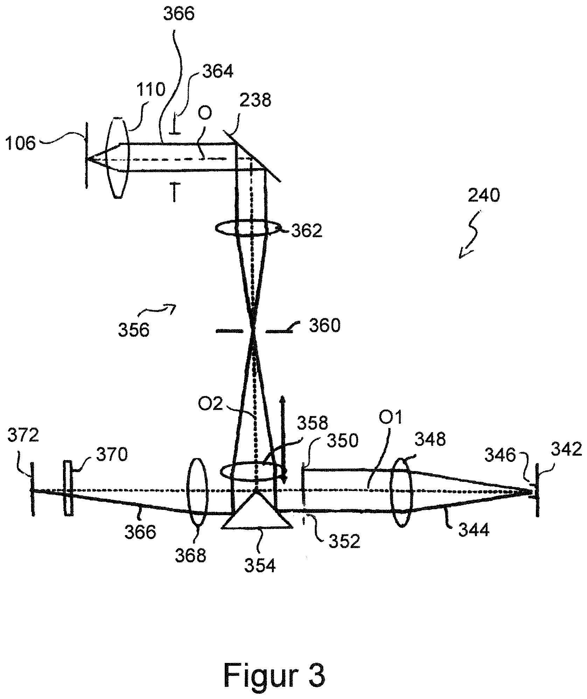

Das Mikroskop 102 nach Figur 2 weist zusätzlich einen Teilerspiegel 238 und eine Erfassungsvorrichtung 240 auf, die ausgebildet ist, den Brechungsindex im Objektraum in situ zu erfassen. Der Teilerspiegel 238 und die Erfassungsvorrichtung 240 sind in Figur 3 im Detail dargestellt.

Wie in Figur 3 gezeigt, hat die Erfassungsvorrichtung 240 eine Lichtquelle 342, die ein Messlichtbündel 344 im Infrarot-Wellenlängenbereich emittiert. Die Lichtquelle 342 ist beispielsweise eine LED, die eine Spaltblende 346 hat, durch die das Messlichtbündel 344 auf eine Beleuchtungsoptik 348 gerichtet wird. Nach Durchtritt durch die Beleuchtungsoptik 348 fällt das Messlichtbündel 344 auf eine Aperturblende 350, die mittig auf der optischen Achse O1 der Beleuchtungsoptik 348 positioniert ist und eine Blendenöffnung 352 hat, die dezentriert mit Abstand zur optischen Achse O1 angeordnet ist. Die Blendenöffnung 352 der Aperturblende 350 begrenzt den Strahlquerschnitt des Messlichtbündels 344 derart, dass nur der in Figur 3 unterhalb der optischen Achse O1 der Beleuchtungsoptik 348 liegende Teil des Messlichtbündels 344 die Aperturblende 350 in Richtung eines Umlenkprismas 354 passiert.

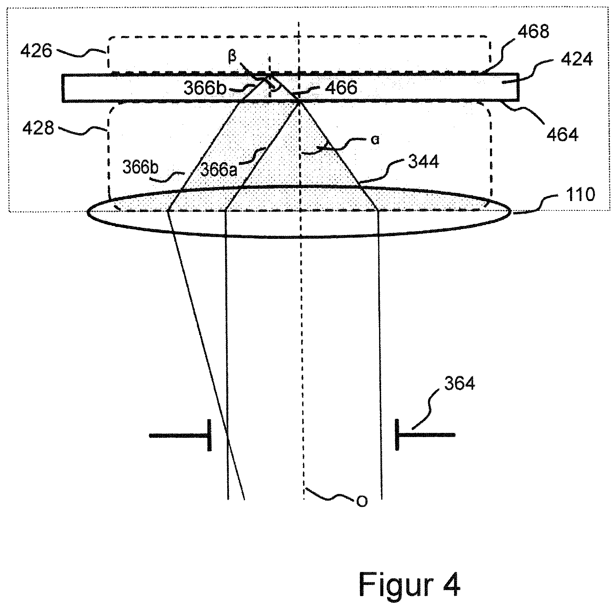

Das in seinem Strahlquerschnitt begrenzte Messlichtbündel 344 wird an dem Umlenkprisma 354 in eine Transportoptik 356 reflektiert, die aus einer längs ihrer optischen Achse O2 verschiebbaren Fokussierlinse 358, einer Streulichtblende 360 und einer weiteren Linse 362 gebildet ist. Nach Durchtritt durch die Transportoptik 356 fällt das Messlichtbündel 344 auf den Teilerspiegel 238, der als dichroitischer Strahlteiler ausgeführt ist. Der Teilerspiegel 238 reflektiert Licht im Infrarot-Wellenlängenbereich, während er Licht im sichtbaren Bereich transmittiert. Durch den Teilerspiegel 238 wird das Messlichtbündel 344 in Richtung des Objektivs 110 reflektiert. Das an dem Teilerspiegel 238 reflektierte Messlichtbündel 344 verläuft dabei mit einem Parallelversatz zur optischen Achse O des Objektivs 110. Auf diese Weise wird das Messlichtbündel 344 in einen Teilbereich einer Eintrittspupille 364 des Objektivs 110 geleitet, der gegenüber der optischen O des Objektivs 110 und damit gegenüber der Mitte der Eintrittspupille 364 seitlich versetzt ist (vgl. auch Figur 4). Die Eintrittspupille 364 des Objektivs 110 wird somit dezentral unterleuchtet, was dazu führt, dass das Messlichtbündel 344 unter einem Winkel α schräg zur optischen Achse O in den Objektraum gelenkt wird.

Unter Bezugnahme auf Figur 4 soll für das vorliegende Ausführungsbeispiel angenommen werden, dass sich in dem Objektraum des Mikroskops 102 ein Deckglas 424 befindet, das dazu dient, das in Figur 4 nicht explizit dargestellte Objekt zu bedecken. Auf dem Deckglas 424 befindet sich ein Einbettmedium 426, in das das Objekt eingebettet ist. In dem Objektraum 414 ist ferner ein Immersionsmedium 428 angeordnet, das in der Darstellung nach Figur 4 von oben an das Objektiv 110 und von unten an das Deckglas 424 grenzt.

Der Einfachheit halber sind in Figur 3 das Einbettmedium 426 und das Immersionsmedium 428, die in dem Objektraum von entgegengesetzten Seiten her an das Deckglas 424 grenzen, weggelassen. Das unter schrägem Einfall in den Objektraum geleitete Messlichtbündel 344 wird, wie weiter unten unter Bezugnahme auf Figur 4 genauer erläutert ist, an dem Deckglas 424 reflektiert, wodurch zwei in das Objektiv 110 zurückgeleitete Reflexionslichtbündel entstehen, die in der schematischen Ansicht nach Figur 3 (im Unterscheid zu der Detailansicht nach Figur 4) in Form eines einzigen, mit 366 bezeichneten Lichtbündels dargestellt sind.

Nach Durchtritt durch das Objektiv 110 fallen die beiden Reflexionslichtbündel 366 auf den Teilerspiegel 238, der die Reflexionslichtbündel 366 in die Transportoptik 356 lenkt. Nach Passieren der Transportoptik 356 fallen die Reflexionslichtbündel 366 auf das Umlenkprisma 354, das die Reflexionslichtbündel 366 auf eine Detektoroptik 368 reflektiert. Die Detektoroptik 368 richtet die Reflexionslichtbündel 366 auf ein Spektralfilter 370, das nur für Licht im Infrarot-Wellenlängenbereich durchlässig ist und Streulicht außerhalb dieses Wellenlängenbereichs blockiert. Die durch das Spektralfilter 370 transmittierten Reflexionslichtbündel 366 fallen schließlich auf einen positionssensitiven Detektor 372, der im Stande ist, die Intensitäten der Reflexionslichtbündel 366 ortsaufgelöst zu erfassen.

In Figur 4 ist genauer gezeigt, wie durch Reflexion des Messlichtbündels 344 die beiden (in Figur 4 mit 366a, 366b bezeichneten) Reflexionslichtbündel generiert werden, die in dem vorliegenden Ausführungsbeispiel zur Bestimmung des Brechungsindex des Einbettmediums 426 genutzt werden. Demnach wird das die Eintrittspupille 364 des Objektivs 110 dezentral unterleuchtende Messlichtbündel 344 durch das Objektiv 110 unter dem Winkel α schräg zur optischen Achse O auf die dem Objektiv 110 zugewandte, in Figur 4 mit 464 bezeichnete Vorderfläche des Deckglases 424 gelenkt. Da das Deckglas 424 und das an dessen Vorderfläche 464 grenzende Immersionsmedium 428 unterschiedliche Brechungsindizes aufweisen, bilden die Vorderfläche 464 des Deckglases 424 und das daran angrenzende Immersionsmedium 28 eine erste Grenzfläche, an der das einfallende Messlichtbündel 344 zum Teil reflektiert wird. Der an dieser ersten Grenzfläche reflektierte Teil des Messlichtbündels 344 erzeugt das erste Reflexionslichtbündel 366a, das zurück in das Objektiv 110 geleitet wird.

Der andere Teil 466 des Messlichtbündels 344, der die erste Grenzfläche transmittiert, wird beim Eintritt in das Deckglas 424 von der optischen Achse O des Objektivs 110 weg gebrochen und schließt mit dieser einen Winkel β ein, der größer als der Winkel α ist. Dieser transmittierte Teil 466 des Messlichtbündels 344 wird zum Teil an einer zweiten Grenzfläche reflektiert, die durch die Rückfläche 468 des Deckglases 424 und das daran angrenzende Einbettmedium 426 definiert ist, das einen anderen Brechungsindex als das Deckglas 424 aufweist. Durch diese zweite Teilreflexion des Messlichtbündels 344 an der zweiten Grenzfläche wird das zweite Reflexionslichtbündel 366b erzeugt, das durch die Vorderfläche 464 des Deckglases 424 tritt und dann zurück in das Objektiv 110 gelangt.

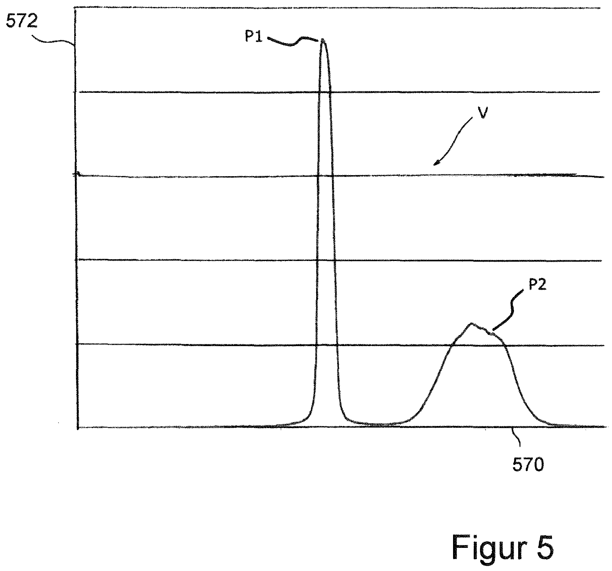

Wie in der Darstellung nach Figur 4 veranschaulicht ist, sorgt der schräge Einfall des Messlichtbündels 344 in den Objektraum dafür, dass die durch die beiden Teilreflexionen an der Vorderfläche 464 bzw. der Rückfläche 468 des Deckglases 424 erzeugten Reflexionslichtbündel 366a, 366b auf unterschiedlichen optischen Wegen zurück in das Objektiv 110 gelangen. Auf diese Weise treffen die beiden Reflexionslichtbündel 366a, 366b an verschiedenen Einfallsorten auf den positionssensitiven Detektor 372. Mit anderen Worten, werden die beiden an der Vorderfläche 464 bzw. der Rückfläche 468 des Deckglases 424 in Form der Spaltbilder generierten Messmuster räumlich voneinander getrennt auf den positionssensitiven Detektor 372 abgebildet, wie in dem Diagramm nach Figur 5 veranschaulicht ist.

Figur 5 zeigt eine beispielhafte Intensitätsverteilung V, welche die beiden Reflexionslichtbündel 366a, 366b gemeinsam auf dem positionssensitiven Detektor 372 erzeugen. Dabei gibt die Abszisse 570 des Diagramms den Einfallsort auf dem Detektor 372 und die Ordinate 572 die an dem jeweiligen Einfallsort gemessene Intensität wieder. Die Intensitätsverteilung V nach Figur 5 zeigt zwei Peaks, von denen der mit P1 bezeichnete Peak dem ersten Reflexionslichtbündel 366a und der mit P2 bezeichnete Peak dem zweiten Reflexionslichtbündel 366b zugeordnet ist. Aus dem Umstand, dass der Peak P1 höher und schärfer als der Peak P2 ist, lässt sich erkennen, dass in dem Beispiel nach Figur 4 das Messlichtbündel 344 auf die Vorderfläche 464 des Deckglases 424 fokussiert ist. Dies bedeutet, dass an der Vorderfläche 464 des Deckglases 424 ein fokussiertes Bild der Spaltblende 346 der Lichtquelle 342 erzeugt wird, während an der Rückfläche 468 des Deckglases 424 ein demgegenüber defokussiertes Bild der Spaltblende 346 entsteht. Dies korrespondiert insoweit mit der Darstellung nach Figur 4, als die erste Teilreflexion an der Vorderfläche 464 des Deckglases 424 an einem Punkt stattfindet, der auf die optische Achse O des Objektivs 110 zentriert ist. Demgegenüber findet die zweite Teilreflexion an der Rückfläche 468 des Deckglases 424 an einem hierzu quer zur optischen Achse O versetzten Punkt statt. Die Flächen unterhalb der in Figur 5 gezeigten Peaks P1, P2 sind jeweils ein Maß für die Intensität des jeweiligen Reflexionslichtbündels 366a, 366b.

In dem vorliegenden Beispiel soll angenommen werden, dass die numerische Apertur des Messlichtbündels 344 sowie die Brechungsindizes des Immersionsmediums 428 und des Deckglases 24 bekannt sind. Mit Kenntnis dieser Größen lässt sich aus dem in situ bestimmten Verhältnis der Intensitäten der Peaks P1 und P2 der Brechungsindex des Einbettmediums 426 berechnen.

Der Brechungsindex, der in vorstehend erläuterter Weise durch die Erfassungsvorrichtung 240 in situ bestimmt wird, stellt in dem Ausführungsbeispiel nach Figur 2 einen Steuerparameter dar, welcher der Steuerung 134 zugeführt wird. Anhand dieses Steuerparameters nimmt die Steuerung 134, wie oben beschrieben, eine gekoppelte Einstellung der Korrektionseinheit und der Zoomoptik 114 vor. Dabei versteht sich von selbst, dass der vorgenannte Steuerparameter nicht auf den Brechungsindex eines Einbettmediums beschränkt ist. Insbesondere kann als Steuerparameter auch der Brechungsindex des Objektes selbst herangezogen werden.

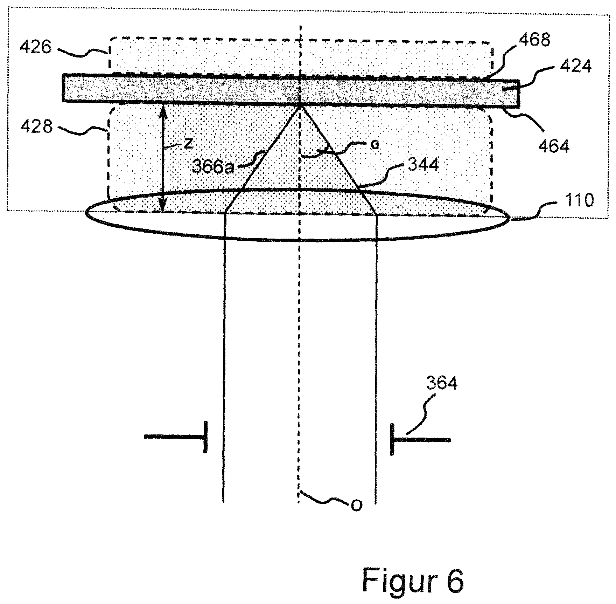

Das in Figur 2 dargestellte Ausführungsbeispiel kann weiterhin dadurch abgeändert werden, dass die beiden zur Verfügung stehenden Einstellfreiheitsgrade, nämlich die Korrektionseinstellung und die Zoomeinstellung, unabhängig voneinander gesteuert werden. In diesem Fall kommt ein weiterer Steuerparameter hinzu, der beispielsweise dem Abstand des Teleskopsystems 104 von einer Referenzebene entspricht, wobei diese Referenzebene die Lage des Objektivs 110 relativ zum Teleskopsystem 104 definiert. Um diesen zusätzlichen Steuerparameter in situ zu erfassen, kann die in den Figuren 2 und 3 gezeigte Erfassungsvorrichtung 240 in einer Weise betrieben werden, die beispielhaft in Figur 6 veranschaulicht ist.

In dem Beispiel nach Figur 6 wird im Unterschied zu der Situation in Figur 4 allein die Reflexion des Messlichtbündels 344 an der Vorderfläche 464 des Deckglases 424 berücksichtigt. Dementsprechend wird nur derjenige Teil des Messlichtbündels 344 ausgewertet, der an der Grenzfläche reflektiert wird, welche durch die Vorderfläche 464 des Deckglases 424 und das daran angrenzende Immersionsmedium 428 gebildet ist.

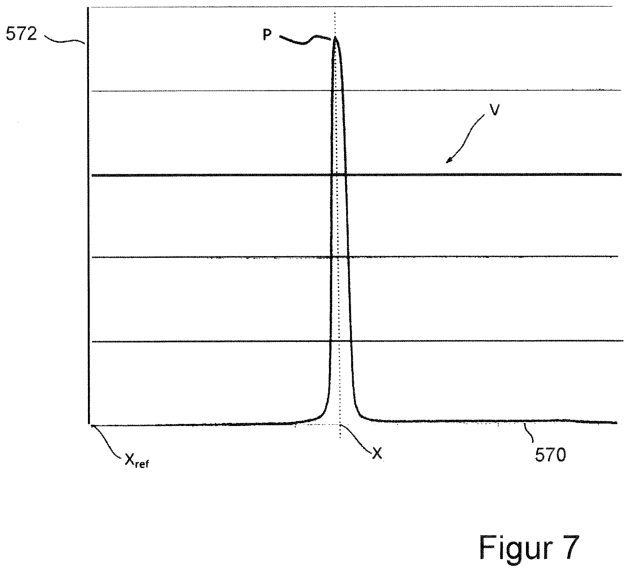

In Figur 7 ist die entsprechende Intensitätsverteilung V gezeigt, die das Reflexionslichtbündel 366a auf dem positionssensitiven Detektor 372 erzeugt. Die Intensitätsverteilung V zeigt einen Peak P, dessen Lage X, die auf dem positionssensitiven Detektor 372 bezüglich einer Referenzlage X_{ref} bestimmt wird, ein Maß für den in Figur 6 gezeigten Abstand z ist, den die Vorderfläche 464 des Deckglases 424 längs der optischen Achse O von dem Objektiv 110 aufweist. Dabei bildet die Vorderfläche 464 des Deckglases 424 die oben genannte Referenzebene. Anhand der Lage X kann so der Abstand z in situ bestimmt werden.

In dieser Ausführungsform sind die beiden Freiheitsgrade, d.h. die Korrektionseinstellung und die Zoomeinstellung, nicht mehr fest miteinander gekoppelt. Indem die Erfassungsvorrichtung 240 sowohl den Abstand des Teleskopsystems 304 von der Referenzebene als auch den objektseitigen Brechungsindex erfasst, lässt sich für jede Lage längs der optischen Achse O innerhalb des Objektes 106 automatisiert eine optimale Korrektion der Volumenabbildung erzielen.

Figur 8 zeigt ein Ausführungsbeispiel für das Objektiv 110, in dem die zur Korrektion des sphärischen Abbildungsfehlers bestimmte Korrektionseinheit integriert ist.

Im Ausführungsbeispiel nach Figur 8 umfasst das Objektiv 110 eine erste Linsengruppe 802 positiver Brechkraft, eine zweite Linsengruppe 804 positiver Brechkraft, eine dritte Linsengruppe 806 negativer Brechkraft und eine vierte Linsengruppe 808 positiver Brechkraft, die in dieser Reihenfolge von der Objektseite her angeordnet sind. Die zweite Linsengruppe 804 ist zur Korrektion der sphärischen Aberration über die Steuerung 134 längs der optischen Achse O verstellbar. Demgegenüber sind die erste Linsengruppe 802, die dritte Linsengruppe 806 und die vierte Linsengruppe 808 ortsfest.

Die erste Linsengruppe 802 ist aus einer ersten Linse 810 negativer Brechkraft und einer zweiten Linse 812 positiver Brechkraft gebildet. Die axial bewegbare Linsengruppe 804 umfasst eine dritte Linse 814 positiver Brechkraft, eine vierte Linse 816 negativer Brechkraft und eine fünfte Linse 818 positiver Brechkraft. Die Linsen 814, 816 und 818 bilden ein Kittglied. Die dritte Linsengruppe 806 umfasst eine sechste Linse 820 positiver Brechkraft und eine siebente Linse 822 negativer Brechkraft. Auch die Linsen 820, 822 bilden ein Kittglied. Die vierte Linsengruppe 808 ist schließlich aus einer achten Linse 824 negativer Brechkraft und einer neunten Linse 826 positiver Brechkraft gebildet.

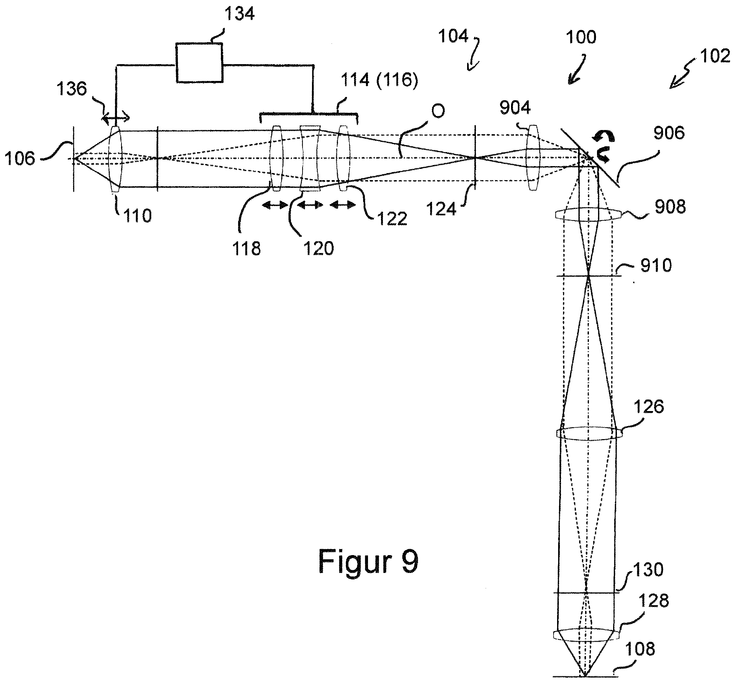

Figur 9 zeigt ein weiteres Ausführungsbeispiel des optischen Systems 100, bei dem das Teleskopsystem 104 über ein weiteres Kepler-Fernrohrsystem verfügt. Letzteres umfasst ausgehend von der Objektseite zur Bildseite hin ein erstes Okularsystem 904, eine Lichtablenkvorrichtung 906 und ein zweites Okularsystem 908. Die Lichtablenkvorrichtung 906 ist beispielsweise aus einem Rasterspiegel gebildet, der sich um zwei senkrecht zueinander liegende Achsen drehen lässt, wie in Figur 9 durch die beiden Pfeile angedeutet ist. Dabei ist die Lichtablenkvorrichtung am Ort einer Zwischenpupille angeordnet. In dem Teleskopsystem 104 nach Figur 9 ist ferner eine weitere Zwischenbildebene 910 vorgesehen.

Abgesehen von dem zusätzlichen Kepler-Fernrohrsystem entspricht die Ausführungsform nach Figur 9 der in Figur 1 dargestellten Ausführungsform. Insbesondere ist auch die Ausführungsform nach Figur 9 auf eine gekoppelte Einstellung der Korrektionseinheit und der Zoomoptik 114 ausgelegt.

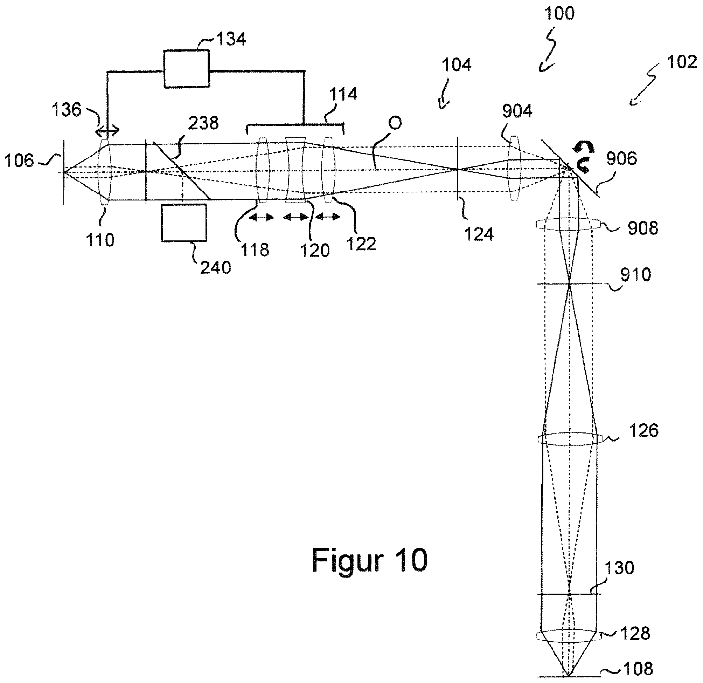

Figur 10 zeigt ein weiteres Ausführungsbeispiel, bei dem im Unterschied zu der in Figur 9 dargestellten Konfiguration die beiden Freiheitsgrade, nämlich die Korrektionseinstellung und die Zoomeinstellung, unabhängig voneinander gesteuert werden. Dementsprechend verfügt die Ausführungsform nach Figur 10 auch über die Erfassungsvorrichtung 240 (entsprechend der in Figur 2 dargestellten Ausführungsform).

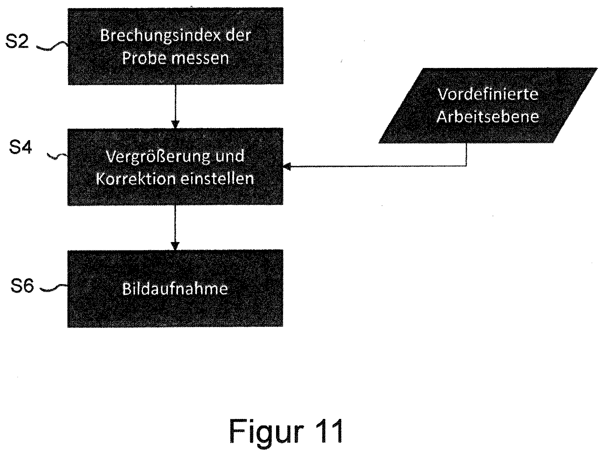

Figur 11 zeigt ein Flussdiagramm, das ein Einstellverfahren veranschaulicht, bei dem die optische Korrektionseinheit, d.h. die zweite Linsengruppe 804 des Objektivs 110 (vgl. Figur 8), und die Zoomoptik 114 gekoppelt angesteuert werden.

Zunächst wird in Schritt S2 der Brechungsindex im Objektraum gemessen. In dem Beispiel nach Figur 11 soll dabei der Brechungsindex des Objektes selbst bestimmt werden.

In Abhängigkeit des in Schritt S2 erfassten Brechungsindex erfolgt anschließend in Schritt S4 die gekoppelte Ansteuerung der Linsengruppe 804 des Objektivs 110 sowie der Zoomoptik 114. Dabei beruht die in Schritt S4 vorgenommene Einstellung auf der Vorgabe einer festen Arbeitsebene, auf die das Teleskopsystem 104 fokussiert ist. Erst diese Vorgabe einer vordefinierten Arbeitsebene ermöglicht nämlich die Implementation einer festen Kopplung zwischen Zoom- und Korrektionseinstellung, wodurch der einzig verbleibende Freiheitsgrad nur noch mit dem Brechungsindex, nicht aber mit der Abbildungstiefe innerhalb des Objektes korreliert.

In Schritt S6 wird schließlich die Bildaufnahme auf Basis der in Schritt S4 vorgenommenen Zoom- und Korrektionseinstellung durchgeführt.

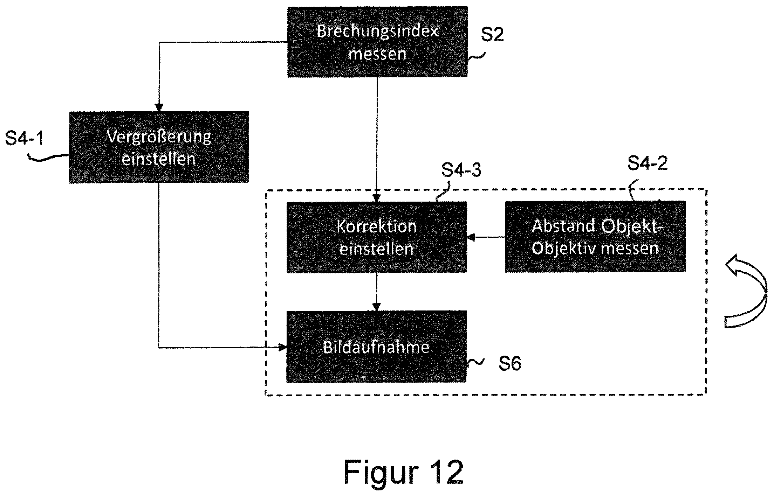

Figur 12 zeigt ein Flussdiagramm zur Veranschaulichung eines Einstellverfahrens, bei dem die optische Korrektionseinheit, d.h. im vorliegenden Ausführungsbeispiel die zweite Linsengruppe 804 des Objektivs 110, und die Zoomoptik 114 unabhängig voneinander angesteuert werden.

In Schritt S2 wird wiederum der objektseitige Brechungsindex unter Verwendung der Erfassungsvorrichtung 240 gemessen. Anschließend wird in Schritt S4-1 die Vergrößerung eingestellt, indem die Zoomoptik 114 in Abhängigkeit des in S2 erfassten Brechungsindex gesteuert wird.

Im Unterschied zu dem in Figur 11 dargestellten Ausführungsbeispiel wird bei dem Verfahren nach Figur 12 zusätzlich der Abstand zwischen dem Objekt 106 und dem Objektiv 110 unter Verwendung der Erfassungsvorrichtung 240 bestimmt. Dies erfolgt beispielsweise unter Bezugnahme auf eine spezielle, durch das Deckglas 424 definierte Referenzebene, wie weiter oben an Hand der Figuren 6 und 7 erläutert worden ist. In Schritt S4-3 wird dann die Korrektionseinstellung durchgeführt, indem die optische Korrektionseinheit in Abhängigkeit dieses Abstands längs der optischen Achse O des Objektivs 110 bewegt wird.

Auf Basis der in den Schritten S4-1 und S4-3 vorgenommenen Einstellungen erfolgt schließlich in Schritt S6 die Bildaufnahme.

In dem Beispiel nach Figur 12 wird angenommen, dass die Einstellung der Zoomoptik 114 unabhängig von der Abbildungstiefe, d.h. unabhängig von dem Abstand, den das Objektiv 110 von dem Objekt 106 aufweist, vorgenommen werden kann. Dementsprechend wird in der in Schritt S4-1 vorgenommenen Vergrößerungseinstellung lediglich der in Schritt S2 erfasste Brechungsindex, nicht aber der in Schritt S4-2 erfasste Abstand berücksichtigt. Es versteht sich jedoch von selbst, dass auch bei der Einstellung der Vergrößerung in Schritt S4-1 der in Schritt S4-2 erfasste Abstand berücksichtigt werden kann, falls dies vorteilhaft sein sollte.

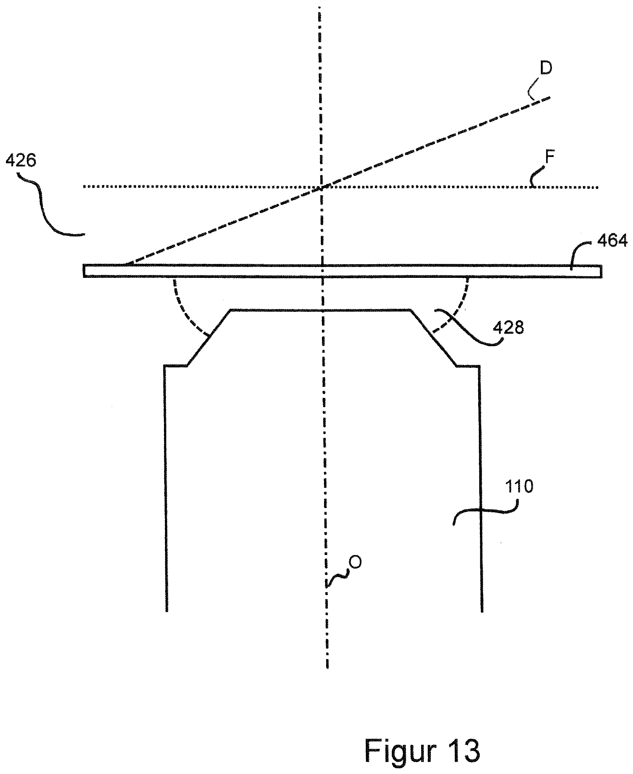

Figur 13 zeigt schließlich in einer schematischen Darstellung, wie sich im Falle einer gekoppelten Korrektions- und Zoomeinstellung eine Arbeitsebene definieren lässt, wenn das Mikroskop 100 zur Volumenbildgebung beispielsweise in einer OPM- oder SCAPE-Konfiguration betrieben wird.

Wie in Figur 6 wird in dem Beispiel nach Figur 13 angenommen, dass das Objektiv 110 mit seiner optischen Achse O senkrecht auf das Deckglas 464 ausgerichtet ist. Dabei befindet sich in Figur 13 unterhalb des Deckglases 464 das Immersionsmedium 428 und oberhalb des Deckglases 464 das Einbettmedium 426, in welches das in Figur 13 nicht explizit dargestellte Objekt eingebettet ist.

In der Konfiguration nach Figur 13 ist die vorgenannte Arbeitsebene durch diejenige Ebene innerhalb des Objektes 106 definiert, auf die das Objektiv 110 fokussiert ist. Diese Fokusebene ist in Figur 13 mit F bezeichnet und liegt senkrecht zur optischen Achse O des Objektivs 110.

In einer OPM- oder SCAPE-Konfiguration wird das Objektiv 110 nicht nur zur Abbildung des Objektes 106, sondern auch zur dessen Beleuchtung verwendet. Dabei erzeugt das Objektiv 110 ein Lichtblatt, das schräg zur optischen Achse O des Objektivs 110 ausgerichtet ist. Diese Schrägstellung des Lichtblatts wird in dieser speziellen Konfiguration dadurch kompensiert, dass eine Detektionsebene D entsprechend gegenüber der optischen Achse O des Objektivs 110 schräggestellt wird. Diese Detektionsebene D definiert diejenige Ebene innerhalb des Objektes 106, die auf einen zur Bilderzeugung verwendeten Bildsensor abgebildet wird.

Die Projektion der Detektionsebene D auf die optischen Achse O definiert die Abbildungstiefe die Volumenbildgebung, d.h. die Ausdehnung des abgebildeten Probenvolumens längs der optischen Achse O. Die Lage der durch die Fokusebene F des Objektivs 110 definierten Arbeitsebene kann nun bezüglich der Detektionsebene D geeignet gewählt werden. In dem Beispiel nach Figur 13 ist die Fokusebene F des Objektivs 110 bezüglich der Detektionsebene D derart positioniert, dass sie längs der optischen Achse O etwa mittig innerhalb der durch die Detektionsebene D definierten Abbildungstiefe liegt. Es versteht sich aber von selbst, dass diese Festlegung nur beispielhaft zu verstehen ist. Unter Berücksichtigung etwaiger Absorptions- oder Streueffekte, die naturgemäß mit der Abbildungstiefe zunehmen, kann die Arbeitsebene auch in anderer Weise bezüglich der Detektionsebene D definiert werden.

Es versteht sich von selbst, dass die vorstehend beschriebenen Ausführungsformen nur beispielhaft zu verstehen sind. So stellt etwa die in Figur 3 gezeigte Erfassungsvorrichtung 240 lediglich ein spezielles Beispiel dafür dar, wie der Brechungsindex und/oder der Abstand des Teleskopsystems 104 von einer Referenzebene bestimmt werden kann. Keinesfalls soll aber die Bestimmung des Brechungsindex bzw. des Abstands auf dieses Beispiel beschränkt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar. Einige oder alle Verfahrensschritte können durch (oder unter Verwendung) einer Hardwarevorrichtung ausgeführt werden, wie es zum Beispiel ein Prozessor, ein Mikroprozessor, ein programmierbarer Computer oder eine elektronische Schaltung sein kann. In einigen Ausführungsbeispielen können ein oder mehrere der wichtigsten Verfahrensschritte durch eine solche Vorrichtung ausgeführt werden.

Abhängig von bestimmten Implementierungsanforderungen können Ausführungsbeispiele der Erfindung in Hardware oder Software implementiert werden. Die Implementierung kann mit einem nicht-flüchtigen Speichermedium wie einem digitalen Speichermedium, wie beispielsweise einer Diskette, einer DVD, einem Blu-Ray, einer CD, einem ROM, einem PROM und EPROM, einem EEPROM oder einem FLASH-Speicher, durchgeführt werden, auf dem elektronisch lesbare Steuersignale gespeichert sind, die mit einem programmierbaren Computersystem so zusammenwirken (oder zusammenwirken können), dass das jeweilige Verfahren durchgeführt wird. Daher kann das digitale Speichermedium computerlesbar sein.

Einige Ausführungsbeispiele gemäß der Erfindung umfassen einen Datenträger mit elektronisch lesbaren Steuersignalen, die mit einem programmierbaren Computersystem zusammenwirken können, so dass eines der hierin beschriebenen Verfahren durchgeführt wird.

Im Allgemeinen können Ausführungsbeispiele der vorliegenden Erfindung als Computerprogrammprodukt mit einem Programmcode implementiert werden, wobei der Programmcode für die Ausführung eines der Verfahren wirksam ist, wenn das Computerprogrammprodukt auf einem Computer läuft. Der Programmcode kann beispielsweise auf einem maschinenlesbaren Träger gespeichert werden.

Weitere Ausführungsbeispiele umfassen das Computerprogramm zur Durchführung eines der hierin beschriebenen Verfahren, das auf einem maschinenlesbaren Träger gespeichert ist.

Mit anderen Worten, ein Ausführungsbeispiel der vorliegenden Erfindung ist daher ein Computerprogramm mit einem Programmcode zur Durchführung eines der hierin beschriebenen Verfahren, wenn das Computerprogramm auf einem Computer läuft.

Ein weiteres Ausführungsbeispiel der vorliegenden Erfindung ist daher ein Speichermedium (oder ein Datenträger oder ein computerlesbares Medium), das ein darauf gespeichertes Computerprogramm zum Ausführen eines der hierin beschriebenen Verfahren umfasst, wenn es von einem Prozessor ausgeführt wird. Der Datenträger, das digitale Speichermedium oder das aufgezeichnete Medium sind in der Regel greifbar und/oder nicht übergangslos. Eine weiteres Ausführungsbeispiel der vorliegenden Erfindung ist eine Vorrichtung, wie hierin beschrieben, die einen Prozessor und das Speichermedium umfasst.

Ein weiteres Ausführungsbeispiel der Erfindung ist daher ein Datenstrom oder eine Signalfolge, die das Computerprogramm zur Durchführung eines der hierin beschriebenen Verfahren darstellt. Der Datenstrom oder die Signalfolge kann beispielsweise so konfiguriert werden, dass sie über eine Datenkommunikationsverbindung, beispielsweise über das Internet, übertragen werden.

Ein weiteres Ausführungsbeispiel umfasst ein Verarbeitungsmittel, zum Beispiel einen Computer oder eine programmierbare Logikvorrichtung, das konfiguriert oder angepasst ist, um eines der hierin beschriebenen Verfahren auszuführen.

Ein weiteres Ausführungsbeispiel umfasst einen Computer, auf dem das Computerprogramm zum Ausführen eines der hierin beschriebenen Verfahren installiert ist.

Ein weiteres Ausführungsbeispiel gemäß der Erfindung umfasst eine Vorrichtung oder ein System, das konfiguriert ist, um (zum Beispiel elektronisch oder optisch) ein Computerprogramm zum Ausführen eines der hierin beschriebenen Verfahren an einen Empfänger zu übertragen. Der Empfänger kann beispielsweise ein Computer, eine mobile Vorrichtung, eine Speichervorrichtung oder dergleichen sein. Die Vorrichtung oder das System kann beispielsweise einen Dateiserver zum Übertragen des Computerprogramms an den Empfänger umfassen.

In einigen Ausführungsbeispielen kann eine programmierbare logische Vorrichtung (z.B. eine feldprogrammierbare Gatteranordnung, FPGA) verwendet werden, um einige oder alle Funktionalitäten der hierin beschriebenen Verfahren auszuführen. In einigen Ausführungsbeispielen kann eine feldprogrammierbare Gatteranordnung mit einem Mikroprozessor zusammenarbeiten, um eines der hierin beschriebenen Verfahren durchzuführen. Im Allgemeinen werden die Verfahren vorzugsweise von jedem Hardwaregerät durchgeführt.

### Bezugszeichenliste

- 100: optisches System
- 102: Mikroskop
- 104: Teleskopsystem
- 106: Objekt
- 108: Bild
- 110: Objektiv
- 112: Brennebene
- 114: Zoomoptik
- 116: Tubuslinseneinheit
- 118: Linseneinheit
- 120: Linseneinheit
- 122: Linseneinheit
- 124: Zwischenbildebene
- 126: Tubuslinseneinheit
- 128: Objektiv
- 130: Brennebene
- 132: Kepler-Fernrohrsystem
- 134: Steuerung
- 136: Fokussiervorrichtung
- 238: Teilerspiegel
- 240: Erfassungsvorrichtung
- 342: Lichtquelle
- 344: Meßlichtbündel
- 346: Spaltblende
- 348: Beleuchtungsoptik
- 350: Aperturblende
- 352: Blendenöffnung
- 354: Umlenkprisma
- 356: Transportoptik
- 358: Fokussierlinse
- 360: Streulichtblende
- 362: Linse
- 364: Eintrittspupille
- 366: Reflexionslichtbündel
- 368: Detektoroptik
- 370: Spektralfilter
- 372: Detektor
- 424: Deckglas
- 426: Einbettmedium
- 428: Immersionsmedium
- 464: Vorderfläche
- 466: Teil des Meßlichtbündels
- 468: Rückfläche
- 570: Abszisse
- 572: Ordinate
- 802: Linsengruppe
- 804: Linsengruppe
- 806: Linsengruppe
- 808: Linsengruppe
- 810: Linse
- 812: Linse
- 814: Linse
- 816: Linse
- 818: Linse
- 820: Linse
- 822: Linse
- 824: Linse
- 826: Linse
- 904: Okularsystem
- 906: Lichtablenkvorrichtung
- 908: Okularsystem
- 910: Zwischenbildebene
- O: optische Achse
- O1: optische Achse
- O2: optische Achse
- F: Fokusebene
- D: Detektionsebene
- α: Winkel
- β: Winkel

## Patentansprüche

1. Optisches System (100) für ein Mikroskop (102) zum Abbilden eines Objekts (106), umfassend:
ein der Objektseite zugewandtes erstes Objektiv (110) und ein der Bildseite zugewandtes zweites Objektiv (128);
ein zwischen dem ersten Objektiv (110) und dem zweiten Objektiv (128) angeordnetes Teleskopsystem (104) mit einer Zoomoptik (114), die zur Anpassung der Vergrößerung des Teleskopsystems (104) an das Verhältnis zweier Brechungsindizes, von denen einer der Objektseite und der andere der Bildseite zugeordnet ist, innerhalb eines vorbestimmten Vergrößerungsbereichs einstellbar ist,
wobei das Teleskopsystem (104) durch die in ihm enthaltene Zoomoptik (114) über den gesamten Vergrößerungsbereich sowohl bezüglich der Objektseite als auch bezüglich des Bildseite telezentrisch ausgeführt ist, und wobei
in dem ersten Objektiv (110) oder in dem zweiten Objektiv (128) eine optische Korrektionseinheit (804) enthalten ist, die zur Korrektion eines sphärischen Abbildungsfehlers einstellbar ist.

2. Optisches System (100) nach Anspruch 1, bei dem die Zoomoptik (114) ausgebildet ist, die der Bildseite zugewandte Brennebene (112) des ersten Objektivs (110) über den gesamten Vergrößerungsbereich auf die der Objektseite zugewandte Brennebene (130) des zweiten Objektivs (128) abzubilden.

3. Optisches System (100) nach einem der vorhergehenden Ansprüche, bei dem der Vergrößerungsbereich des Teleskopsystems (104) einem Bereich entspricht, in dem das Verhältnis der beiden Brechungsindizes zwischen 1,0 und 1,6 liegt.

4. Optisches System (100) nach einem der vorhergehenden Ansprüche, bei dem das Teleskopsystem (104) ein zwischen dem ersten Objektiv (110) und dem zweiten Objektiv (128) angeordnetes Kepler-Fernrohrsystem (132) enthält, in dem die Zoomoptik (114) enthalten ist.

5. Optisches System (100) nach Anspruch 4, bei dem das Kepler-Fernrohrsystem (132) zwei Tubuslinseneinheiten (114, 126) enthält, von denen eine die Zoomoptik (114) bildet.

6. Optisches System (100) nach einem der vorhergehenden Ansprüche, bei dem die Zoomoptik (114) mindestens drei Linseneinheiten (118, 120, 122) enthält, die zum Ändern der Vergrößerung des Teleskopsystems (104) längs dessen optischer Achse (O) bewegbar sind.

7. Optisches System (100) nach Anspruch 6, ferner umfassend eine Fokussiervorrichtung (136), die ausgebildet ist, das erste Objektiv (110) längs dessen optischer Achse (O) relativ zu dem Objekt (106) zu bewegen, wodurch sich der Abstand des ersten Objektivs (110) von dem Kepler-Fernrohrsystem (132) ändert, wobei die drei Linseneinheiten (118, 120, 122) der Zoomoptik (114) längs der optischen Achse (O) unabhängig voneinander derart bewegbar sind, dass bei sich änderndem Abstand des ersten Objektivs (110) von dem Kepler-Fernrohrsystem (132) die der Bildseite zugewandte Brennebene (112) des ersten Objektivs (110) unter Beibehaltung der durch die Zoomoptik (114) eingestellten Vergrößerung und der Afokalität des Teleskopsystems (104) auf die der Objektseite zugewandte Brennebene (130) des zweiten Objektivs (128) abgebildet wird.

8. Optisches System (100) nach einem der vorhergehenden Ansprüche, ferner umfassend eine Vorrichtung (240), die ausgebildet ist, den dem Objektraum zugeordneten Brechungsindex zu erfassen, und eine Steuerung (134), die ausgebildet ist, die optische Korrektionseinheit (804) und die Zoomoptik (114) in Abhängigkeit des erfassten Brechungsindex einzustellen.

9. Optisches System (100) nach Anspruch 8, bei dem die Steuerung (134) ausgebildet ist, die optische Korrektionseinheit (804) und die Zoomoptik (114) miteinander gekoppelt in Abhängigkeit des erfassten Brechungsindex einzustellen.

10. Optisches System (100) nach Anspruch 8, ferner umfassend eine Vorrichtung (240), die ausgebildet ist, den Abstand (z) des Teleskopsystems (104) von einer Referenzebene (464) zu erfassen, welche die Lage des Objektes (106) relativ zu dem Teleskopsystem (104) definiert,
wobei die Steuerung (134) ausgebildet ist, zumindest die optische Korrektionseinheit (804) zusätzlich in Abhängigkeit des erfassten Abstandes (z) einzustellen.

11. Mikroskop (102) mit einem optischen System (100) nach einem der vorhergehenden Ansprüche.

12. Verfahren zur Abbildung eines Objekts (106) unter Verwendung eines Mikroskops (102) nach Anspruch 11, mit folgenden Schritten:
Korrigieren eines sphärischen Abbildungsfehlers durch Einstellen der optischen Korrektionseinheit (804), und
Anpassen der Vergrößerung des Teleskopsystems (104) innerhalb eines vorbestimmten Vergrößerungsbereichs an das Verhältnis zweier Brechungsindizes, von denen einer der Objektseite und der andere der Bildseite zugeordnet ist, durch Einstellen der Zoomoptik (114),
wobei der Brechungsindex, welcher der Objektseite zugeordnet ist, erfasst wird und die optische Korrektionseinheit (804) und die Zoomoptik (114) in Abhängigkeit dieses Brechungsindex eingestellt werden.

13. Verfahren nach Anspruch 12, bei dem eine Arbeitsebene (F) vorgegeben wird, auf die das Teleskopsystem (104) fokussiert ist, und die optische Korrektionseinheit (804) und die Zoomoptik (114) miteinander gekoppelt in Abhängigkeit des erfassten Brechungsindex eingestellt werden.

14. Verfahren nach Anspruch 12, bei dem der Abstand (z) des Teleskopsystems (104) von einer Referenzebene (464) erfasst wird, welche die Lage des Objektes (106) relativ zu dem Teleskopsystem (104) definiert, und zumindest die optische Korrektionseinheit (804) zusätzlich in Abhängigkeit des erfassten Abstandes (z) eingestellt wird.

## Claims

1. An optical system (100) for a microscope (102) for imaging an object (106), comprising:
a first objective (110) facing the object side and a second objective (128) facing the image side;
a telescope system (104) arranged between the first objective (110) and the second objective (128), with zoom optics (114), which are adjustable, within a predetermined magnification range, to adapt the magnification of the telescope system (104) to the ratio of two refractive indices, one of which is assigned to the object side and the other to the image side, wherein the telescope system (104) is designed to be telecentric over the entire magnification range both with respect to the object side and with respect to the image side due to the zoom optics (114) contained therein, and wherein an optical correction unit (804) is contained in the first objective (110) or in the second objective (128), which optical correction unit is adjustable for correcting a spherical aberration.

2. The optical system (100) according to claim 1, in which the zoom optics (114) are designed to image the focal plane (112) of the first objective (110) facing the image side onto the focal plane (130) of the second objective (128) facing the object side over the entire magnification range.

3. The optical system (100) according to any one of the preceding claims, in which the magnification range of the telescope system (104) corresponds to a range in which the ratio of the two refractive indices is between 1.0 and 1.6.

4. The optical system (100) according to any one of the preceding claims, in which the telescope system (104) contains a Kepler telescope system (132) which is arranged between the first objective (110) and the second objective (128) and in which the zoom optics (114) are contained.

5. The optical system (100) according to claim 4, in which the Kepler telescope system (132) contains two tube lens units (114,126), one of which forms the zoom optics (114).

6. The optical system (100) according to any one of the preceding claims, in which the zoom optics (114) contain at least three lens units (118, 120, 122) which, in order to change the magnification of the telescope system (104), are movable along optical axis (O) thereof.

7. The optical system (100) according to claim 6, further comprising a focusing device (136) which is designed to move the first objective (110) along its optical axis (O) relative to the object (106), whereby the distance of the first objective (110) from the Kepler telescope system (132) changes, wherein the three lens units (118, 120, 122) of the zoom optics (114) are movable along the optical axis (O) independently of one another in such manner that when the distance of the first objective (110) from the Kepler telescope system (132) changes, the focal plane (112) of the first objective (110) facing the image side is imaged onto the focal plane (130) of the second objective (128) facing the object side, while maintaining the magnification set by the zoom optics (114) and the afocality of the telescope system (104).

8. The optical system (100) according to any one of the preceding claims, further comprising a device (240) which is designed to detect the refractive index, associated with the object space, and a controller (134) which is designed to adjust the optical correction unit (804) and the zoom optics (114) as a function of the detected refractive index.

9. The optical system (100) according to claim 8, in which the controller (134) is designed to adjust the optical correction unit (804) and the zoom optics (114) in a manner coupled to one another as a function of the detected refractive index.

10. The optical system (100) according to claim 8, further comprising a device (240) designed to detect the distance (z) of the telescope system (104) from a reference plane (464), which defines the position of the object (106) relative to the telescope system (104),
wherein the controller (134) is designed to additionally adjust at least the optical correction unit (804) as a function of the detected distance (z).

11. A microscope (102) with an optical system (100) according to any one of the preceding claims.

12. A method for imaging an object (106) using a microscope (102) according to claim 11, with the following steps:
correcting a spherical aberration by adjusting the optical correction unit (804), and
adjusting the magnification of the telescope system (104) within a predetermined magnification range to the ratio of two refractive indices, one of which is assigned to the object side and the other to the image side, by adjusting the zoom optics (114),
wherein the refractive index, associated with the object side, is detected and the optical correction unit (804) and the zoom optics (114) are adjusted as a function of this refractive index.

13. The method according to claim 12, in which a working plane (F) is predefined onto which the telescope system (104) is focused, and the optical correction unit (804) and the zoom optics (114) are adjusted in a manner coupled to one another as a function of the detected refractive index.

14. The method according to claim 12, in which the distance (z) of the telescope system (104) from a reference plane (464) is detected, which defines the position of the object (106) relative to the telescope system (104), and at least the optical correction unit (804) is additionally adjusted as a function of the detected distance (z).

## Revendications

1. Système optique (100) pour un microscope (102) destiné à former l'image d'un objet (106), comprenant :
un premier objectif (110) tourné vers le côté objet et un deuxième objectif (128) tourné vers le côté image ;
un système télescopique (104) disposé entre le premier objectif (110) et le deuxième objectif (128), comprenant
une optique de zoom (114), qui est réglable dans une plage de grossissement prédéfinie pour adapter le grossissement du système télescopique (104) au rapport de deux indices de réfraction dont l'un est associé au côté objet et l'autre au côté image, dans lequel le système télescopique (104) est réalisé de manière télécentrée par l'optique de zoom (114) qu'il contient sur toute la plage de grossissement tant par rapport au côté objet que par rapport au côté image, et dans lequel une unité de correction optique (804), qui est apte à être réglée pour corriger une erreur de reproduction sphérique, est contenue dans le premier objectif (110) ou le deuxième objectif (128).

2. Système optique (100) selon la revendication 1, dans lequel l'optique de zoom (114) est réalisée pour représenter le plan focal (112) du premier objectif (110) tourné vers le côté image sur toute la plage de grossissement sur le plan focal (130) du deuxième objectif (128) tourné vers le côté objet.

3. Système optique (100) selon l'une quelconque des revendications précédentes, où la plage de grossissement du système télescopique (104) correspond à une plage dans laquelle le rapport des deux indices de réfraction est compris entre 1,0 et 1,6.

4. Système optique (100) selon l'une quelconque des revendications précédentes, où le système télescopique (104) comporte un système de longue-vue Kepler (132) disposé entre le premier objectif (110) et le deuxième objectif (128), dans lequel l'optique de zoom (114) est contenue.

5. Système optique (100) selon la revendication 4, où le système de longue-vue Kepler (132) comporte deux unités de lentille tubulaire (114, 126), dont l'une forme l'optique de zoom (114).

6. Système optique (100) selon l'une quelconque des revendications précédentes, où l'optique de zoom (114) comporte au moins trois unités de lentille (118, 120, 122) qui, pour modifier le grossissement du système télescopique (104), peuvent être déplacées le long de l'axe optique (O) de celui-ci.

7. Système optique (100) selon la revendication 6, comprenant en outre un dispositif de focalisation (136) qui est réalisé pour déplacer le premier objectif (110) le long de son axe optique (O) par rapport à l'objet (106), ce qui permet de modifier ainsi la distance du premier objectif (110) par rapport au système de longue-vue Kepler (132), dans lequel les trois unités de lentille (118,120,122) de l'optique de zoom (114) peuvent être déplacées indépendamment les unes des autres le long de l'axe optique (O) de telle manière que lorsque la distance du premier objectif (110) par rapport au système de longue-vue Kepler (132) change, le plan focal (112), tourné vers le côté image, du premier objectif (110) est représenté sur le plan focal (130), tourné vers le côté objet, du deuxième objectif (128) tout en maintenant le grossissement réglé par l'optique de zoom (114) et l'afocalité du système télescopique (104).

8. Système optique (100) selon l'une quelconque des revendications précédentes, comprenant en outre un dispositif (240), qui est réalisé pour détecter l'indice de réfraction associé à l'espace d'objet, et une commande (134) qui est réalisée pour régler l'unité de correction optique (804) et l'optique de zoom (114) en fonction de l'indice de réfraction détecté.

9. Système optique (100) selon la revendication 8, où la commande (134) est réalisée pour régler l'unité de correction optique (804) et l'optique de zoom (114) de manière couplée l'une à l'autre en fonction de l'indice de réfraction détecté.

10. Système optique (100) selon la revendication 8, comprenant en outre un dispositif (240) qui est réalisé pour détecter la distance (z) du système télescopique (104) par rapport à un plan de référence (464) qui définit la position de l'objet (106) par rapport au système télescopique (104),
dans lequel la commande (134) est réalisée pour régler au moins l'unité de correction optique (804) en plus en fonction de la distance (z) détectée.

11. Microscope (102) comprenant un système optique (100) selon l'une quelconque des revendications précédentes.

12. Procédé pour représenter un objet (106) en utilisant un microscope (102) selon la revendication 11, comprenant les étapes suivantes :
correction d'une erreur de représentation sphérique en réglant l'unité de correction optique (804), et
adaptation du grossissement du système télescopique (104) dans une plage de grossissement prédéfinie au rapport de deux indices de réfraction dont l'un est associé au côté objet et l'autre au côté image, en réglant l'optique de zoom (114),
dans lequel l'indice de réfraction, qui est associé au côté objet, est détecté et l'unité de correction optique (804) et l'optique de zoom (114) sont réglées en fonction de cet indice de réfraction.

13. Procédé selon la revendication 12, dans lequel un plan de travail (F) sur lequel le système télescopique (104) est focalisé est prédéfini, et l'unité de correction optique (804) et l'optique de zoom (114) sont réglées de manière couplée entre elles en fonction de l'indice de réfraction détecté.

14. Procédé selon la revendication 12, où la distance (z) du système télescopique (104) par rapport au plan de référence (464) est détectée, qui définit la position de l'objet (106) par rapport au système télescopique (104), et au moins l'unité de correction optique (804) est réglée en plus en fonction de la distance (z) détectée.
